# EUROPEAN PATENT SPECIFICATION

(11) **EP 3 317 079 B1**
(45) Date of publication and mention of the grant of the patent: **01.05.2019**
(21) Application number: 16738203.5
(22) Date of filing: 28.06.2016
(51) Int. Cl.: B29C 51/10, B29C 51/42

(54) **METHOD FOR SHAPING A FILM-LIKE/SHEET-LIKE MATERIAL**
VERFAHREN ZUR FORMUNG EINES FILMARTIGEN/FOLIENARTIGEN MATERIALS
PROCÉDÉ DE FAÇONNAGE D'UN MATÉRIAU DE TYPE FILM/DE TYPE FEUILLE

(30) Priority: 30.06.2015 EP 15397532
(43) Date of publication of application: 09.05.2018
(73) Proprietor: Aalto University Foundation SR, 00076 Aalto (FI)
(72) Inventor: VALKAS, Timo, 03600 Karkkila (FI); SEPÄNMAA, Arto, 51740 Huuhanaho (FI); PARTANEN, Jouni, 02100 Espoo (FI)
(74) Representative: Seppo Laine Oy
(86) International application number: PCT/FI2016/050469
(87) International publication number: WO 2017/001726

(56) References cited:
- EP-A1- 2 247 430
- DE-A1-102006 006 662

## Description

The present invention relates to a method for shaping a film-like/sheet-like material. In particular, it relates to a method for changing the shape of a film or sheet, especially to create various three-dimensional shapes in a film or sheet.

Many different methods are used to shape plastic sheets. One example is the creation of Braille printing intended for the blind to read. Because plastic is a very common material in many applications, various articles made with the aid of heating and then shaping are made for very many different purposes.

In order to shape plastic, for example, into the shape of a cup, a mould can be used, into which plastic material, softened with the aid of heat, is pulled with the aid of a vacuum. A typical example of this kind of procedure is disclosed in the German application publication 10349156. As a source of heat, a laser source, for example, can be used, by means of which specific areas of a generally flat sheet-like material are heated, after which shaping takes place by suction against a mould. A similar method is disclosed in German application publication 10106183, in which specific areas are heated and subsequently formed using a mould.

A method is known from US patent application 2002/0062161, in which a wall deformation is created in a piece with a closed volume, or in a sheet, by heating the wall with a laser light and causing a pressure difference in the wall/film, which causes the wall to bulge outwards, in such a way that the most heated parts bulge more than the less heated parts. Thus, the shape is created by the differential stretching of parts heated to different degrees. Additionally, publications EP 0703019 A1 and JP 2002 154161 A disclose methods in which a sheet is posed on top of a chamber, parts of the sheet are heated and then deformed by pressurizing the chamber.

Publication WO 2005/007386 A2 discloses a method for shaping a plate-like object by locally heating at least a portion of it while exerting differential pressure on the opposite sides. This method is directed towards achieving local smoothly shaped deformations. Moreover, different shapes are achieved by modifying the laser beam using optical elements.

Publication US patent publication 5,359,872, in turn, discloses a method for sheet metal processing in which the area to be deformed is heated by a laser beam prior to the deformation. According to the method, shapes extending from the sheet can be formed by first heating an area corresponding to the shape and subsequently drawing the area using a drawing jig also corresponding to the shape. Furthermore, more complex three-dimensional shapes are formed using a set of several drawing jigs specific for the shape in question.

In European patent 2 247 430, a method is disclosed for shaping a material film or sheet for producing three-dimensional structures. The outlines of a free-form image to be formed on a film/sheet are heated to a required temperature by rapidly moving, selectively directed thermal radiation. Pressure is applied to one side of the film. The pressure stretches the film at the heated outlines of the image, so that the image is transferred from the surface of the film to a raised position. This procedure is repeated moving the heated outline sequentially, resulting in a three-dimensioned shape. By this method, general three-dimensional forming of almost arbitrary surfaces defined by the shape of the set of contour curves is possible.

In German laid-open publication No. 10 2006 006 662 is disclosed a process in which a plastic body is selectively coated with a heat-reflective film. The surface is heated using radiators whereby the uncoated areas soften and can be drawn with vacuum against a forming tool, forming a raised pattern corresponding to the heated and unheated areas of the plastic body. A single step is described, and it remains unclear how the body is supported to prevent the unheated areas to be drawn as well.

According to the present invention, an improved method utilizing the principle of European patent 2 247 430 is provided. As pressure is applied to a material in which a contour curve has been heated, there is a risk that the material ruptures along the heated curve if the material is stretched beyond its capacity. This risk can be reduced or eliminated by means of the present invention.

### Summary of the invention

According to the present invention, a film or sheet is formed into a three-dimensional shape using local heating and a pressure differential across the film or sheet material as defined in claim 1. Preferably, the heating is provided by focused or collimated thermal radiation; preferably, a laser beam is used.

A countersurface is provided to limit the stretching of the heated material. After the material has cooled and hardened again, a next heated and softened contour curve is formed in the sheet material. The countersurface is moved to a new position before, after or during the forming of the next heated contour curve or outline. A pressure difference is again applied, stretching the material along the heated outline until it again meets the countersurface . The process is repeated as required until the desired shape is obtained.

One embodiment of the invention is described with reference to the accompanying patent drawings.

Thus:
Figure 1 shows the initial situation, the first outline being applied on an essentially flat sheet of material,
Figure 2 shows the step of applying a pressure difference,
Figure 3 shows how the stretching is limited, and
Figure 4 shows the final product.

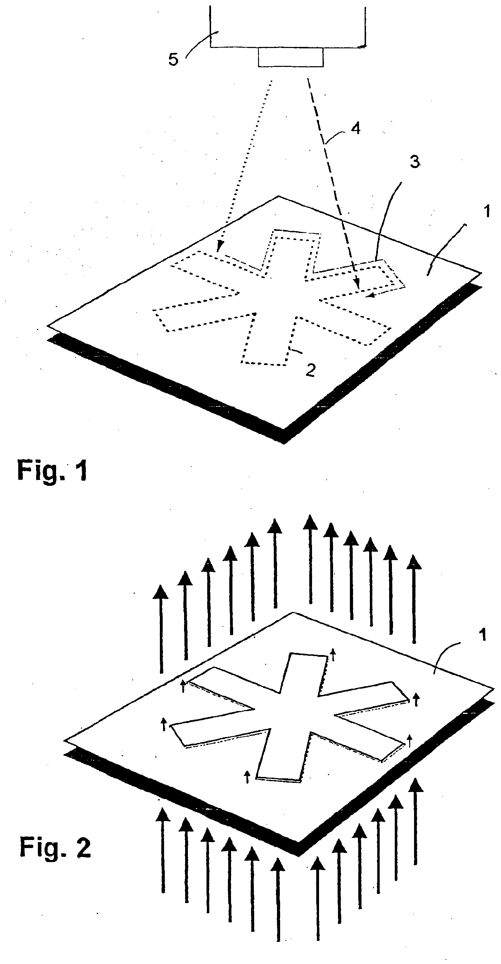

Thus, Figure 1 shows an essentially sheet-like initial product 1, on which a shape to be made is indicated by dotted lines 2. Following the edge line of the shape 2, it is bordered by a line marked by broken lines 3, along which the area is heated to a temperature that permits a pressure-pulse stage, which takes place next. The source of the heating radiation 4 is marked with the reference number 5. The source can be, for example, a laser light source.

No more detailed reference is made here to laser technology, which is one possible heat source, because this area of technology will be conventional technology to one skilled in the art.

The intention is to heat the outlines of the image in the material to such a temperature that in the following stage, the outlines will be sufficiently elastic for a pressure difference to cause stretching in the material, so that the heated parts of the material sheet or film heated along the desired outlines will stretch and the unheated area remaining inside the heated lines will rise from the level of the material, in the direction of the lower pressure.

Figure 2 shows the vacuum and/or excess pressure treatment described above. In this case, a lower pressure prevails above the sheet 1 than below it, so that a portion of the sheet heated along its outlines rises upwards from the level of the rest of the sheet/film.

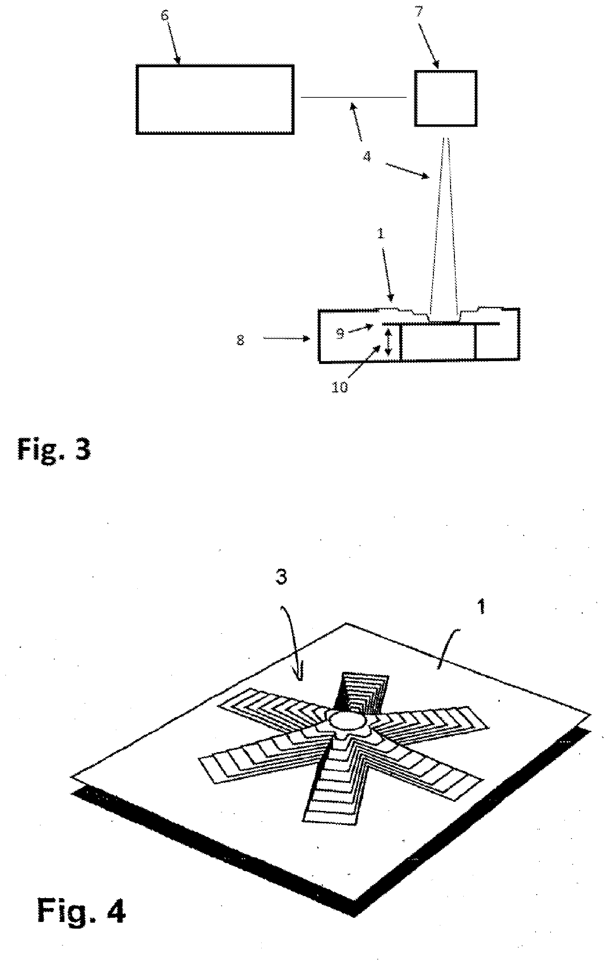

Figure 3 shows how a beam from a laser 6 is directed to a galvanometric scanning mirror device 7, corresponding to the generally depicted radiation source 5 of Fig. 1. A computer or a special purpose microprocessor (not shown) controls the scanning mirrors 7 so that the laser heating pattern draws a contour onto the sheet material 1 that is attached to a chamber 8, in which the pressure has been reduced relative to the outside of the chamber. Inside the chamber 8, there is a flat horizontal platform 9 that is attached to a vertically movable translation mechanism 10. This platform acts as a countersurface limiting the movement of the sheet portion that shifts due to the pressure difference between the upper and lower surface of the sheet.
Initially, the platform 9 is located at a height below the top surface of the chamber 8 corresponding to the desired and allowable stretching of the heated contour area. After the laser beam softens the first contour, the pressure differential above the sheet material 1 pushes the material within the contour area to abut the platform 9. When the laser is turned off, the material cools and hardens maintaining the step shape. The platform can now be moved down by another desired increment. The system is now ready for the laser to soften the next contour and the pressure above pushes the interior of the contour again to abut the platform 9. The process continues until the defined shape has been formed through consecutive heating and stretching steps.

In the above figures, the stepped shape is shown roughly for reasons of clarity. In practice, the final shape may be achieved by slicing the final 3D shape into very thin 2D slices, from which the shaping of one slice at a time in the desired direction is performed as consecutive operations. Even a relatively simple final shape may involve a significant number of stages.

Negative shapes can also be made according to the invention. This refers to the fact that the desired shape is created with the aid of heating and excess or vacuum pressurization, which excess or vacuum pressurization is performed in the opposite direction to the general direction of the overall shape. In this case, it is also possible, if necessary, to exploit the memory property of the material, when re-heating of the outlines will return it to its former shape.

It is obvious that according to the invention, very many different types of material can be used. The most obvious material is an organic polymer. However, other materials that become plastic at a certain temperature are also suitable for use according to the invention. For example, nearly all metals soften to become malleable at a certain, specific temperature. One interesting area is also composite-structure films/sheets. Thus, whether the use of a specific material will succeed or not depends only on variables such as the dimensioning of the heating power source, the duration of its operation, and similar.

It is also obvious that reference to a sheet or film includes a large variation in material thicknesses.

The temperature is controlled in some suitable manner. The skilled person is aware of a large range of alternatives for this purpose in different fields of technology. However, it can be mentioned that temperature can be measured and its control performed, for example, with the aid of a heat camera based on infrared technology monitoring the laser beam. Temperature monitoring may be used in the general control of the process.

In this context, it should be noted that according to the aforementioned procedures, the heating can take place in such a way that a continuously heating radiation beam is moved along the outlines of the image to be formed, when the material will heat at the outlines.

Another way is one, in which the thermal radiation moves along a specific, usually backwards and forwards path, and heating occurs locally only at points located on the outlines of the image being formed. The movement of the thermal radiation can be achieved by moving a component creating thermal radiation, but more probably it will take place in such a way that the control of the thermal radiation takes place with the aid of mirrors, lenses, or corresponding optical elements, as exemplified above.

A third alternative is an embodiment where the heated area is created in such a way that a pattern shaped to correspond to the area to be heated by a thermal radiation beam is created in the heating head which is aimed at the material to be heated, and a heated area corresponding to the outlines of the shape, arises in a single operation. There are several ways of forming a thermal radiation beam of a desired shape, whereby optical methods are the most likely.

A procedure of this kind can be envisaged as very advantageous when a relatively simple product is being made in a large series.

A common feature in all of described embodiments is that the heating is performed only along the outline of the area to be raised from the initial plane.

According to the method according to the invention, the heating/pressurization cycles can be repeated for a desired number of new coordinates, which means that three-dimensional surfaces can be formed from a film/sheet in the same manner as in vacuum moulding, but in the present method the geometry of the piece is created directly by numerical control, without moulds.

It should also be noted, that shapes can also be formed, for example in such a way that, as already stated, shapes that are 'negative' with respect to the previous stage are made onto three dimensional shapes created by one way or another in a stage. This refers, for example, to a situation, in which the product is shaped originally, by means of vacuum forming, for example, with the aid of a mould. For vacuum forming to be possible, the product must not have protrusions extending in opposite directions, as such a shape would prevent it from being detached from the mould.

By means of the method according to the invention, the shaping of a vacuum-moulded body can be carried out in a continuous operation, generating protrusions in any direction during the process. As such, the method is suitable for very many different purposes.

If desired, temperature and/or distance measurement can be used as variables controlling algorithms exclusively or in combination. Return and reshaping according to the prior art can also be used in this method.

Experiments have shown that liquid, as well as pressurized air or gas can be used for shaping, in which case the control of the shape becomes a mathematically calculable change in volume of each free-form change in shape.

In practice, an application can be based on a computer-based system, in which the desired three-dimensional model is loaded into the system, which slices the model into parts and which controls the heating and operating unit according to the model produced, the unit performing the shaping in stages of the film or sheet by heating specific outlines, performing the stretching of the material at the outlines with the aid of pressure, simultaneously controlling the movement of the countersurface limiting the stretching, and thus manufacturing the final product.

Any known system with the aid of which a targeted heating effect can be created can be used for heating. Such systems are particularly based on the use of laser or infrared-range light and on possible optical concentration, collimation or reflection of the light.

Because the return/returning of the film is not necessary in all cases, this extends the range of materials available for use.

The invention can be varied in many ways without nevertheless deviating from the scope of protection of the basic idea of the invention as defined in the accompanying claims.

## Claims

1. A method for shaping a material film or sheet (1) for making three-dimensional shapes, in which method the film or sheet (1) is heated and a pressure difference is applied by means of a pressure medium to one side of the film or sheet; the heating being performed along an outline (3) of the three-dimensional shape (2) to be formed to a temperature which will permit a change in the shape of the film or sheet (1) in the area of the heated outline (3) and will create stretching along the heated outline (3) in order to cause the unheated part of the film or sheet (1) inside the outline (3) to deviate from its initial plane, the targeted three-dimensional structure being divided into two-dimensional slices, the outlines (3) of which in the film or sheet (1) are sequentially heated and subjected to a pressure difference to generate the desired structure, **characterized in** comprising the following steps:
- providing a countersurface (9) to limit the stretching of the heated material during a stretching stage
- allowing the material to cool and harden
- moving the countersurface (9) to a new position
- heating a next outline (3)
- applying a pressure difference to stretch the material along said next heated outline (3) until the material again meets the countersurface (9)
- repeating the process until the desired shape is obtained.

2. A method according to claim 1, **characterized in that** the heated outlines are formed in the film or sheet (1) by directing a moving beam (4) of thermal radiation to it.

3. A method according to any of the above claims, **characterized in that** the film or sheet (1) consists of an organic polymer, particularly of a thermoplastic material.

4. A method according to any of the above claims, **characterized in that** the film or sheet (1) has a composite structure.

5. A method according to any of the above claims, **characterized in that** the film or sheet (1) is of metal or a metal alloy.

6. A method according to claim 1, **characterized in that** pulses of pressurized medium are used to shape the film or sheet (1) in different directions in different stages.

7. A method according to claim 1, **characterized in that** the heating is performed by using a source (5, 6) of collimated or focused infrared or laser light.

8. A method according to any of the above claims, **characterized in that** in the shaping, a computer-based system is used, into which the three-dimensional model to be formed is loaded.

## Patentansprüche

1. Verfahren zum Formen eines Materialfilms oder eines Materialblechs (1) zur Herstellung dreidimensionaler Formen, bei dem der Film oder das Blech (1) erwärmt und mittels eines Druckmediums eine Druckdifferenz auf eine Seite des Films oder des Blechs aufgebracht wird; wobei die Erwärmung entlang eines Umrisses (3) der zu bildenden dreidimensionalen Form (2) auf eine Temperatur durchgeführt wird, die eine Änderung der Form des Films oder des Blechs (1) im Bereich des erwärmten Umrisses (3) ermöglicht und eine Dehnung entlang des erwärmten Umrisses (3) erzeugt, um zu bewirken, dass der unbeheizte Teil des Films oder des Blechs (1) innerhalb des Umrisses (3) von seiner Ausgangsebene abweicht, wobei die angestrebte dreidimensionale Struktur in zweidimensionale Scheiben unterteilt ist, deren Umrisse (3) in dem Film oder dem Blech (1) nacheinander erwärmt und einer Druckdifferenz ausgesetzt werden, um die gewünschte Struktur zu erzeugen, **dadurch gekennzeichnet, dass** es die folgenden Schritte umfasst:
- Bereitstellen einer Gegenfläche (9), um das Strecken des erwärmten Materials während einer Streckphase zu begrenzen
- das Material abkühlen und aushärten lassen
- Bewegen der Gegenfläche (9) in eine neue Position
- Erwärmen eines nächsten Umrisses (3)
- Anlegen einer Druckdifferenz, um das Material entlang des nächsten erwärmten Umrisses (3) zu dehnen, bis das Material wieder auf die Gegenfläche (9) trifft
- Wiederholen des Prozesses, bis die gewünschte Form erreicht ist.

2. Verfahren nach Anspruch 1, **dadurch gekennzeichnet, dass** die erwärmten Umrisse in dem Film oder dem Blech (1) gebildet werden, indem ein sich bewegender Strahl (4) von Wärmestrahlung auf sie gerichtet wird.

3. Verfahren nach einem der vorstehenden Ansprüche, **dadurch gekennzeichnet, dass** der Film oder das Blech (1) aus einem organischen Polymer, insbesondere aus einem thermoplastischen Material, besteht.

4. Verfahren nach einem der vorstehenden Ansprüche, **dadurch gekennzeichnet, dass** der Film oder das Blech (1) eine Verbundmaterialstruktur aufweist.

5. Verfahren nach einem der vorstehenden Ansprüche, **dadurch gekennzeichnet, dass** der Film oder das Blech (1) aus Metall oder einer Metalllegierung besteht.

6. Verfahren nach Anspruch 1, **dadurch gekennzeichnet, dass** Impulse von druckbeaufschlagtem Medium verwendet werden, um den Film oder das Blech (1) in verschiedenen Richtungen in verschiedenen Stufen zu formen.

7. Verfahren nach Anspruch 1, **dadurch gekennzeichnet, dass** das Erwärmen unter Verwendung einer Quelle (5, 6) aus kollimiertem oder fokussiertem Infrarot- oder Laserlicht durchgeführt wird.

8. Verfahren nach einem der vorstehenden Ansprüche, **dadurch gekennzeichnet, dass** bei der Formgebung ein computergestütztes System verwendet wird, in das das zu bildende dreidimensionale Modell geladen wird.

## Revendications

1. Procédé permettant de former un film ou une feuille (1) de matériau permettant de fabriquer des formes tridimensionnelles, dans lequel procédé le film ou la feuille (1) est chauffé(e) et une différence de pression est appliquée au moyen d'un agent de pressurisation sur un côté du film ou de la feuille ; le chauffage étant effectué le long d'un contour (3) de la forme tridimensionnelle (2) devant être façonnée jusqu'à une température qui permettra un changement de forme du film ou de la feuille (1) dans la zone du contour (3) chauffé et créera un étirement le long du contour (3) chauffé afin d'amener la partie non chauffée du film ou de la feuille (1) à l'intérieur du contour (3) à dévier de son plan initial, la structure tridimensionnelle ciblée étant divisée en tranches bidimensionnelles, les contours (3) de celles-ci dans le film ou la feuille (1) sont séquentiellement chauffés et soumis à une différence de pression pour générer la structure souhaitée, **caractérisé en ce qu'**il comprend les étapes suivantes :
- la fourniture d'une surface opposée (9) pour limiter l'étirement du matériau chauffé durant une phase d'étirement
- le fait de laisser le matériau refroidir et durcir
- le déplacement de la surface opposée (9) jusqu'à une nouvelle position
- le chauffage d'un contour (3) suivant
- l'application d'une différence de pression pour étirer le matériau le long dudit contour (3) chauffé suivant jusqu'à ce que le matériau rencontre à nouveau la surface opposée (9)
- la répétition du processus jusqu'à ce que la forme souhaitée soit obtenue.

2. Procédé selon la revendication 1, **caractérisé en ce que** les contours chauffés sont façonnés dans le film ou la feuille (1) en dirigeant un faisceau mobile (4) de rayonnement thermique sur celui ou celle-ci.

3. Procédé selon l'une quelconque des revendications précédentes, **caractérisé en ce que** le film ou la feuille (1) est constitué(e) d'un polymère organique, particulièrement d'un matériau thermoplastique.

4. Procédé selon l'une quelconque des revendications précédentes, **caractérisé en ce que** le film ou la feuille (1) a une structure composite.

5. Procédé selon l'une quelconque des revendications précédentes, **caractérisé en ce que** le film ou la feuille (1) est en métal ou en un alliage métallique.

6. Procédé selon la revendication 1, **caractérisé en ce que** des impulsions d'un milieu pressurisé sont utilisées pour former le film ou la feuille (1) dans différentes directions à différentes phases.

7. Procédé selon la revendication 1, **caractérisé en ce que** le chauffage est effectué à l'aide d'une source (5, 6) de lumière infrarouge ou laser collimatée ou focalisée.

8. Procédé selon l'une quelconque des revendications précédentes, **caractérisé en ce que** lors de la formation, un système informatisé est utilisé, dans lequel le modèle tridimensionnel devant être façonné est chargé.
